# EUROPEAN PATENT SPECIFICATION

(11) **EP 2 032 451 B1**
(45) Date of publication and mention of the grant of the patent: **20.01.2010**
(21) Application number: 07729253.0
(22) Date of filing: 17.05.2007
(51) Int. Cl.: B65D 5/74, B31B 1/84

(54) **POUR SPOUT DEVICE**
GIESSTÜLLENVORRICHTUNG
DISPOSITIFS D'EMBOUTS VERSEURS

(30) Priority: 17.05.2006 GB 0609770
(43) Date of publication of application: 11.03.2009
(73) Proprietor: ELOPAK SYSTEMS AG, 8152 Glattbrugg (CH)
(72) Inventor: ADLER, Nils Peter, 1383 Asker (NO); KIESER, Wolfgang, 67744 Hohenollen (DE)
(74) Representative: Burrows, Anthony Gregory
(86) International application number: PCT/EP2007/054805
(87) International publication number: WO 2007/132021

(56) References cited:
- WO-A-93/14001
- JP-A- 2005 239 206
- US-A- 5 397 013
- US-A- 5 597 082
- US-A1- 2001 015 355

## Description

This invention relates to a method of applying a pour spout device to a container and also relates to a pour spout device itself.

It is well known to weld an upper surface of a flange of a pour spout of a screw-capped, thermoplastics, pour spout fitment, commonly by ultrasonic sealing, to an inside thermoplastics surface of a wall of a carton, with the cap and the spout having been introduced into a through hole in the wall. It is also well known for an L-section tamper-evident band to be connected to the lower rim of the skirt of the cap by way of frangible bridges, with the foot of the L-section engaging below an annular shoulder protruding radially outwardly from the pour spout at a spacing above the flange. US-A1-2001/0015355 discloses a similar welding method and a similar spout fitment.

According to one aspect of the present invention, there is provided a method comprising:-
providing a pour spout device comprising an externally threaded pour spout, an internally threaded cap for closing said pour spout, and a tamper-evidence arrangement attached to said cap, and
weldingly applying said device to a wall of a container,
characterized by welding said arrangement to said pour spout and/or to said wall, with said welding of said arrangement being substantially simultaneous with said weldingly applying of said device.

Owing to this aspect of the invention, it is possible to simplify the production apparatus and process, since the weldingly applying of the device to the wall and the welding of the tamper-evidence arrangement can be performed by one-and-the-same piece of equipment, in particular by an ultrasonic sealer.

According to a second aspect of the present invention, there is provided a pour spout device for applying to a wall of a container, comprising an externally threaded pour spout having a flange projecting outwardly from a lower end zone thereof, and an internally threaded cap for closing said pour spout, said cap including a substantially L-section means projecting downwardly from a body of said cap, the upper limb of said substantially L-section including a frangible, tamper-evident bridge, characterized in that the lower limb of the substantially L-section is weldable to an upper surface of said flange.

According to a third aspect of the present invention, there is provided in combination, a container and a pour spout device applied to a wall of said container, said device comprising an externally threaded pour spout having a flange projecting outwardly from a lower end zone thereof, and an internally threaded cap for closing said pour spout, said cap including a substantially L-section means projecting downwardly from a body of said cap, the upper limb of said substantially L-section including a frangible, tamper-evident bridge, characterized in that the lower limb of the substantially L-section is welded to an upper surface of said flange and/or said wall.

In a preferred embodiment of the invention, the lower limb comprises a ring, which may consist of a plurality of discrete ring segments, and the ring includes substantially radial flanging.

In one version, where the device includes a barrier disc, the pour spout includes an upwardly and outwardly protruding annular shoulder at an inner periphery of the flange of the pour spout, and also includes a countersink corresponding to the shoulder and seating an outer periphery of the barrier disc. In that version, the ring includes an upper zone and a lower zone relatively thin radially compared with the upper zone, joining the upper zone to the flanging and located immediately radially outwardly of the shoulder.

In the preferred embodiment, the bridge is one of a multitude of relatively tall bridges. The discrete ring segments may be substantially co-extensive in peripheral widths with the respective bridges.

In order that the invention may be clearly and completely disclosed, reference will now be made, by way of example, to the accompanying drawings, in which:-
Figure 1 is an axial sectional view of a pour spout device attached to a packaging carton, the device being in a condition following production thereof by moulding and following welding thereof to the inside surface of a wall of the carton;
Figure 2 is a top plan view of the device but with the carton wall omitted for the sake of clarity;
Figure 3 is a view similar to Figure 1 but of a modified version of the device;
Figure 4 is a top plan view of the version of Figure 3;
Figure 5 is a detail X of Figure 1 or Figure 3;
Figure 6 is a view similar to Figure 5, but showing a modification;
Figure 7 is a view similar to Figure 1 of another modified version of the device;
Figure 8 is a top plan view of that other modified version;
Figure 9 is a partly sectional side elevation of that other modified version, prior to opening thereof;
Figure 10 is a view similar to Figure 9, but of that other modified version at a time during opening thereof;
Figure 11 is a view similar to Figure 9, but of a further modified version of the device;
Figure 12 is a top plan view of a still further modified version of the device; and
Figure 13 is a view similar to Figure 9 of that still further modified version.

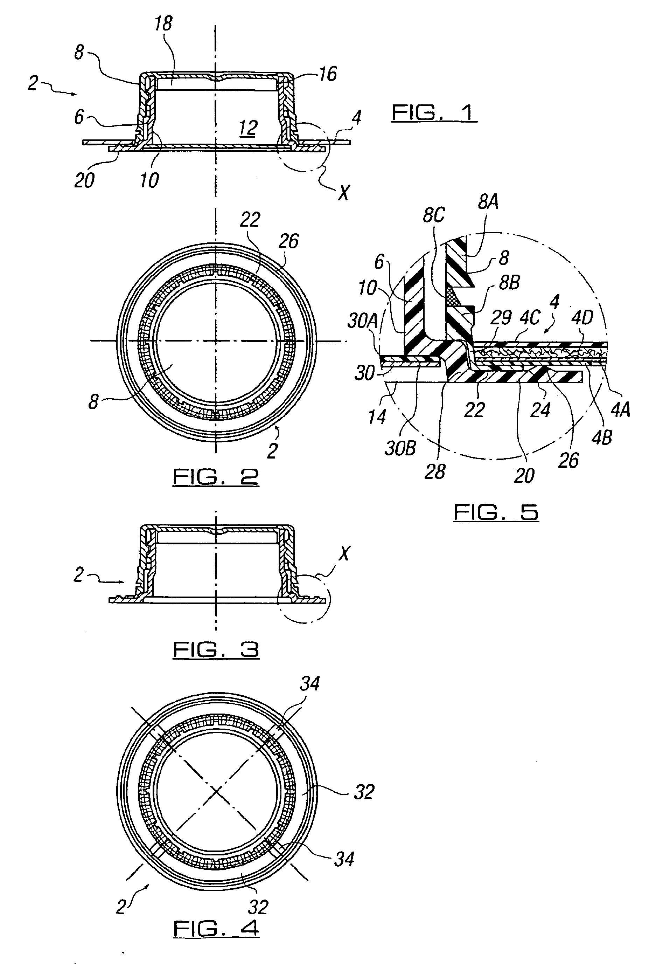

Referring to Figures 1, 2 and 5, the pour spout 2 takes the form of a fitment which, in the condition shown, is applied to a wall 4 of a packaging carton for a flowable substance, the wall 4 comprising a paperboard layer 4A coated at its inner and outer surfaces with thermoplastics layers 4B and 4C. The layers 4B and 4C may be of a moisture barrier plastics material, particularly low density polyethylene (LDPE), and there is an oxygen barrier layer 4D of, for example, aluminium foil or ethylene vinyl alcohol (EVOH) between the layers 4A and 4B. The flowable substance contained may be a liquid, such as fruit juice, or a powder.

The device 2 comprises an externally threaded pour spout 6 and a screw cap 8 for closing the spout 6. The pour spout 6 includes a pour spout body 10 encircling a pouring outlet 12 and having an inflow mouth 14 and an outflow mouth 16. A skirt 18 of the cap 8 fits sealingly into the outflow mouth 16. The pour spout 6 also includes a flange 20 which protrudes radially outwards from the body 10 and whereby the spout 6 is welded in a fluid-tight manner to the layer 4B, the device 2 being of a thermoplastics material suitable for being ultrasonically welded to the layer 4B.

The device 2 is moulded in two pieces, with one piece being the spout 6 and the other piece being the cap 8. The cap 8 consists of a cap body 8A, a flanged ring 8B co-axial with the body 8A, thus forming an L-section of the cap, and tamper-evident bridges 8C interconnecting the body 8A and the ring 8B. At some time after moulding, the two pieces 6 and 8 are axially pressed together such that internal screw-threading of the cap 8 rides over external screw-threading of the spout 6, to bring the pieces 6 and 8 to the condition shown in Figures 1, 2 and 5. In this condition, the flange 22 of the ring 8B forming the lower limb of the L-section, which flange 22 is significantly thinner than an upper part of the ring 8B, arrives in an annular hollow 24 between an energy ring 26 on the upper surface of the flange 20 and an annular shoulder 28 of the spout 6. A web 29 of the ring 8B interconnects that upper part and the flange 22 and is thin in order to enable the wall 4 to approach as closely as possible to the body 10. Upon ultrasonic welding of the device 2 to the wall 4, the flange 22 is welded to both the layer 4B and the flange 20. The shoulder 28 exists in this version because the pouring outlet 12 is countersunk at its inflow mouth 14 to receive a barrier disk 30 which may comprise a thermoplastics sealing layer 30A for attaching the disk 30 to the spout 6 and an oxygen barrier layer 30B of, for example, aluminium foil or EVOH.

The version of Figures 3 and 4 differs from that of Figures 1 and 2 solely in that the ring 8B is segmented, so that there are four arcuate segments 32, each subtending almost a right-angle at the axis of the device 2, with short gaps 34 among them. Again, the arcuate segments 32 are connected to the cap body 8A by the tamper-evident bridges 8C.

The provision of the oxygen barriers 4D and 30B are particularly preferred in the long-life packaging of otherwise short-life products, such as fruit juices.

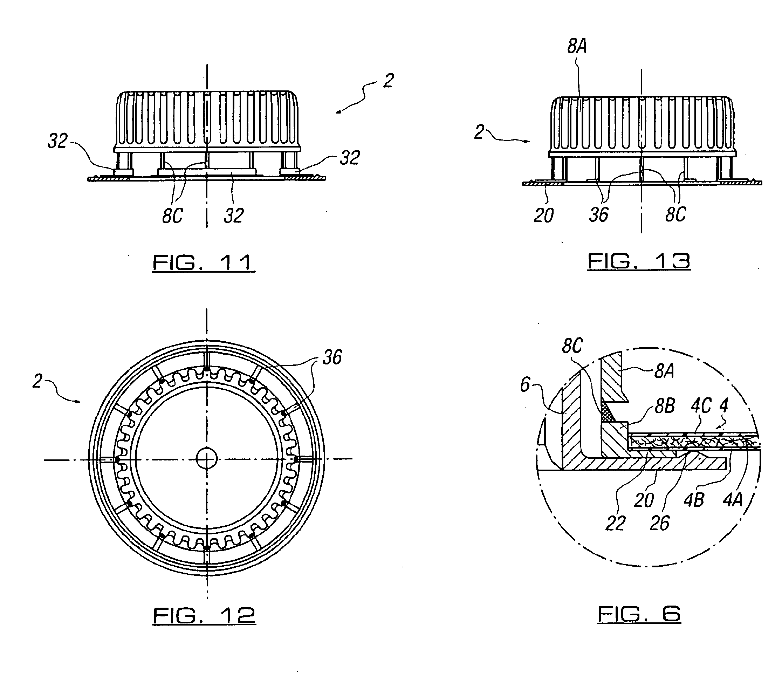

In circumstances where an oxygen barrier layer 30B (and even the oxygen barrier layer 4D) is not required, then the versions of Figures 1 to 4 may each be modified as illustrated in Figure 6, in which the shoulder 28 is omitted, as is the thin web 29 joining the flange 22 to the remainder of the ring 8B.

Instead of there being four segments, there may be more or less than four; even a single arcuate segment is a possibility.

With the versions shown in Figures 1 to 6, where the bridges 8C are very short in proportion to the total height of the device 2, it can be difficult reliably to mould them repetitively in such a way that the bridges remain thin, i.e. that the gaps among them do not reduce in size. This makes its more difficult for consumers to open the device, because the opening torque required could thus be greater than the designed torque. Furthermore, the shortness of the bridges makes it difficult for consumers immediately to ascertain whether the tamper-evident bridges have already been broken.

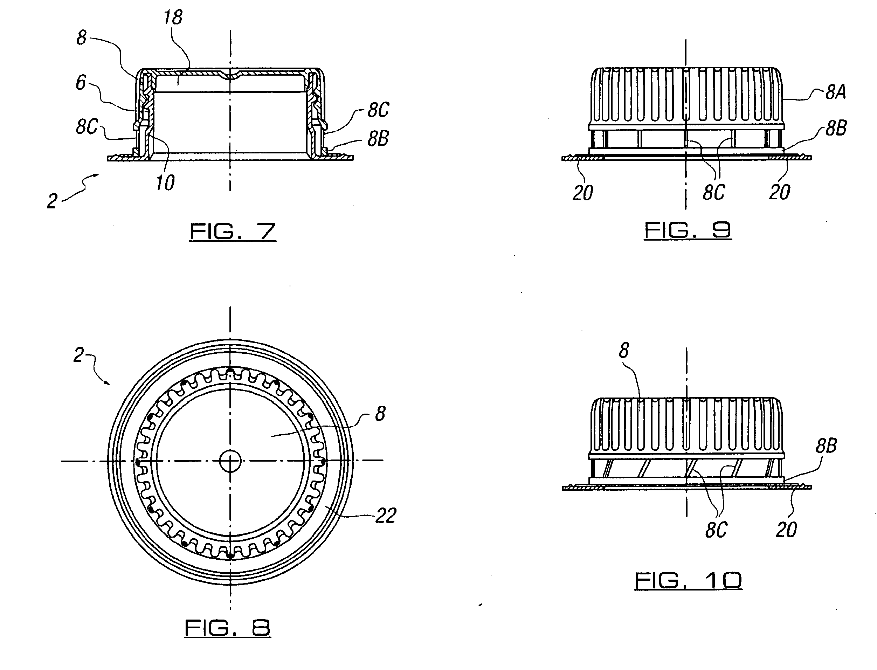

The version shown in Figures 7 to 10 differs from that shown in Figures 1 and 2 as modified by Figure 6 solely in that the bridges 8C are relatively tall, whereby not only is reduction in the size of the gaps among them during moulding less likely, so that the opening torque required is very likely to be the designed torque, but also the consumer can more readily see when the bridges have been broken. Furthermore, a relative saving of material is achieved.

5 Figure 10 illustrates the anticlockwise turning of the cap body 8A in order to commence breaking of the bridges 8C.

The version shown in Figure 11 differs from that shown in Figures 7 to 10 solely in that it has, instead of the ring 8B, segments 32 corresponding to those of the version of Figures 3 and 4.

The version of Figures 12 and 13 differs from that of Figure 11 solely in that the segments 32 have each been reduced in peripheral width to that of each of the bridges 8C, so that the tamper evident bridges 8C are, in effect, provided by L-shaped arms 36.

The height of the bridges 8C in the versions of Figures 7 to 13 is at least 10%, preferably about 20%, if not more, of the height of the device 2.

## Claims

1. A method comprising:-
providing a pour spout device (2) comprising an externally threaded pour spout (6), an internally threaded cap (8) for closing said pour spout (6), and a tamper-evidence arrangement (8B, 8C) attached to said cap (8), and
weldingly applying said device (2) to a wall (4) of a container,
**characterized by** welding said arrangement (8B, 8C) to said pour spout (6) and/or to said wall (4), with said welding of said arrangement (8B, 8C) being substantially simultaneous with said weldingly applying of said device(2).

2. A method according to claim 1, wherein said weldingly applying of said device (2) and said welding of said arrangement (8B, 8C) are performed by one-and-the-same ultrasonic sealer.

3. A method according to claim 1 or 2, wherein said weldingly applying of said device (2) is weldingly applying said device (2) to an internal surface of said wall (4) round a hole through said wall (4) and said welding of said arrangement (8B, 8C) is welding of a part (22) of said arrangement (8B, 8C) between said internal surface and said pour spout (6) to said internal surface and said pour spout (6).

4. A pour spout device (2) for applying to a wall (4) of a container, comprising an externally threaded pour spout (6) having a flange (20) projecting outwardly from a lower end zone thereof, and an internally threaded cap (8) for closing said pour spout (6), said cap (8) including a substantially L-section means projecting downwardly from a body (8A) of said cap (8), the upper limb of said substantially L-section including a frangible, tamper-evident bridge (8C), **characterized in that** the lower limb (22) of the substantially L-section is weldable to an upper surface of said flange (20).

5. A device according to claim 4, wherein said substantially L-section means comprises a ring (8B).

6. A device according to claim 5, wherein said ring (8B) consists of a plurality of discrete ring segments (32; 36).

7. A device according to any one of claims 4 to 6, wherein said ring (8B) includes substantially radial flanging (22).

8. A device according to claim 7, wherein said pour spout (6) includes an upwardly and outwardly protruding annular shoulder (28) at an inner periphery of said flange (22), and said ring (8B) includes an upper zone, and a lower zone (22) relatively thin radially compared with said upper zone, joining said upper zone to said flanging (22) and located immediately radially outwardly of said shoulder (28).

9. A device according to claim 8 and further comprising a barrier disc (30), wherein said pour spout (6) includes a countersink corresponding to said shoulder (28) and seating an outer periphery of said barrier disc (30).

10. A device according to any one of claims 4 to 9, wherein said bridge (8C) is one of a multitude of relatively tall, frangible, tamper-evident bridges (8C) distributed round said cap(8).

11. A device according to claim 10 as appended to claim 6, wherein the segments (36) are substantially co-extensive in peripheral width with respective said bridges (8C).

12. In combination, a container and a pour spout device (2) applied to a wall (4) of said container, said device (2) comprising an externally threaded pour spout (6) having a flange (20) projecting outwardly from a lower end zone thereof, and an internally threaded cap (8) for closing said pour spout (6), said cap (8) including a substantially L-section means projecting downwardly from a body (8A) of said cap (8), the upper limb of said substantially L-section including a frangible, tamper-evident bridge (8C), **characterized in that** the lower limb (22) of the substantially L-section is welded to an upper surface of said flange (20) and/or said wall(4).

13. A combination according to claim 12, wherein said substantially L-section means comprises a ring (8B).

14. A combination according to claim 12 or 13, wherein said lower limb (22) is located between and welded to said flange (20) and an internal surface of said wall (4) round a hole through said wall (4).

15. A combination according to claim 14, wherein said flange (20) is weldingly attached to said internal surface radially outwardly of said lower limb (22).

## Patentansprüche

1. Verfahren mit den folgenden Schritten:
Vorsehen einer Gießtüllenvorrichtung (2) mit einer ein Außengewinde aufweisenden Gießtülle (6), einer ein Innengewinde aufweisenden Kappe (8) zum Schließen der Gießtülle (6), und einer an der Kappe (8) angebrachten Manipulationsnachweisanordnung (8B, 8C), und
Schweißbefestigen der Vorrichtung (2) an einer Wand (4) eines Behälters,
**gekennzeichnet durch** das Schweißen der Anordnung (8B, 8C) an die Gießtülle (6) und/oder die Wand (4), wobei das Schweißen der Anordnung (8B, 8C) im Wesentlichen gleichzeitig mit dem Schweißbefestigen der Vorrichtung (2) erfolgt.

2. Verfahren nach Anspruch 1, bei dem das Schweißbefestigen der Vorrichtung (2) und das Schweißen der Anordnung (8B, 8C) durch die selbe Ultraschall-Siegelvorrichtung erfolgen.

3. Verfahren nach Anspruch 1 oder 2, bei dem das Schweißbefestigen der Vorrichtung (2) ein Anschweißen der Vorrichtung (2) an eine Innenfläche der Wand (4) um ein Loch in der Wand (4) ist, und das Schweißen der Anordnung (8B, 8C) darin besteht, dass ein Teil (22) der Anordnung (8B, 8C) zwischen der Innenfläche und der Gießtülle (6) an die Innenfläche und die Gießtülle (6) angeschweißt wird.

4. Gießtüllenvorrichtung (2) zur Anbringung an einer Wand (4) eines Behälters, mit einer ein Außengewinde aufweisenden Gießtülle (6) mit einem von einer unteren Endzone derselben nach außen ragenden Flansch (20), und mit einer ein Innengewinde aufweisenden Kappe (8) zum Verschließen der Gießtülle (6), wobei die Kappe (8) eine Einrichtung mit einem im Wesentlichen L-förmigen Querschnitt aufweist, welche von einem Körper (8A) der Kappe (8) nach unten ragt, wobei der obere Schenkel des im Wesentlichen L-förmigen Querschnitts eine zerstörbare Manipulationsnachweisbrücke (8C) aufweist, **dadurch gekennzeichnet, dass** der untere Schenkel (22) des im Wesentlichen L-förmigen Querschnitts an die Oberseite des Flanschs (20) schweißbar ist.

5. Vorrichtung nach Anspruch 4, bei welcher die Einrichtung mit einem im Wesentlichen L-förmigen Querschnitt einen Ring (8B) aufweist.

6. Vorrichtung nach Anspruch 5, bei welcher der Ring (8B) aus mehreren diskreten Ringsegmenten (32; 36) besteht.

7. Vorrichtung nach einem der Ansprüche 4 bis 6, bei welcher der Ring (8B) einen im Wesentlichen radialen Flansch (22) aufweist.

8. Vorrichtung nach Anspruch 7, bei welcher die Gießtülle (6) eine nach oben und außen ragende Ringschulter (28) an einem Innenumfang des Flanschs (22) aufweist, und der Ring (8B) eine obere Zone und eine untere Zone (22) aufweist, die im Vergleich mit der oberen Zone radial relativ dünn ist, die obere Zone mit dem Flansch (22) verbindet und sich unmittelbar radial auswärts der Schuler (28) befindet.

9. Vorrichtung nach Anspruch 8 und ferner mit einer Sperrscheibe (30), bei welcher die Gießtülle (6) eine der Schulter (28) entsprechende und den Außenumfang der Sperrscheibe (30) aufnehmende Vertiefung aufweist.

10. Vorrichtung nach einem der Ansprüche 4 bis 9, bei welcher die Brücke (8C) eine von mehreren relativ großen, zerstörbaren Manipulationsnachweisbrücken (8C) ist, welche um die Kappe (8) herum verteilt sind.

11. Vorrichtung nach Anspruch 10 bezogen auf Anspruch 6, bei welcher die Segmente (36) sich über die Umfangsbreite mit jeweiligen Brücken (8C) im Wesentlichen decken.

12. Kombination aus einem Behälter und einer an einer Wand (4) des Behälters angebrachten Gießtüllenvorrichtung (2), wobei die Vorrichtung (2) eine mit einem Außengewinde versehene Gießtülle (6) mit einem Flansch (20), welcher von einer unteren Endzone derselben nach außen ragt, und eine mit einem Innengewinde versehene Kappe (8) zum Verschließen der Gießtülle (6) aufweist, wobei die Kappe (8) eine Einrichtung mit im Wesentlichen L-förmigem Querschnitt aufweist, welche von dem Körper (8A) der Kappe (8) nach unten ragt, wobei der obere Schenkel des im Wesentlichen L-förmigen Querschnitts eine zerstörbare Manipulationsnachweisbrücke (8C) aufweist, **dadurch gekennzeichnet, dass** der untere Schenkel (22) des im Wesentlichen L-förmigen Querschnitts an die Oberseite des Flanschs (20) schweißbar ist.

13. Kombination nach Anspruch 12, bei welcher die Einrichtung mit einem im Wesentlichen L-förmigen Querschnitt einen Ring (8B) aufweist.

14. Kombination nach Anspruch 12 oder 13, bei welcher der untere Schenkel (22) sich zwischen dem Flansch (20) und der Innenfläche der Wand (4) um ein Loch in der Wand (4) herum befindet und an diese geschweißt ist.

15. Kombination nach Anspruch 14, bei welcher der Flansch (20) radial auswärts des unteren Schenkels (22) schweißend an der Innenfläche angebracht ist.

## Revendications

1. Procédé comprenant les étapes consistant à :
prévoir un dispositif formant bec verseur (2) comprenant un bec verseur (6) fileté extérieurement, un bouchon fileté intérieurement (8) pour fermer ledit bec verseur (6), et un agencement inviolable (8B, 8C) fixé audit bouchon (8), et
appliquer par soudage ledit dispositif (2) sur une paroi (4) d'un récipient,
**caractérisé par** l'étape consistant à souder ledit agencement (8B, 8C) sur ledit bec verseur (6) et/ou sur ladite paroi (4), avec ledit soudage dudit agencement (8B, BC) qui est sensiblement simultané à ladite application par soudage dudit dispositif (2).

2. Procédé selon la revendication 1, dans lequel ladite application par soudage dudit dispositif (2) et ledit soudage dudit agencement (8B, 8C) sont réalisés par une seule et même scelleuse ultrasonore.

3. Procédé selon la revendication 1 ou 2 dans lequel ladite application par soudage dudit dispositif (2) consiste à appliquer par soudage ledit dispositif (2) sur une surface interne de ladite paroi (4) autour d'un trou passant par ladite paroi (4) et ledit soudage dudit agencement (8B, 8C) consiste à souder une partie (22) dudit agencement (8B, 8C) entre ladite surface interne et ledit bec verseur (6) sur ladite surface interne et ledit bec verseur (6).

4. Dispositif formant bec verseur (2) destiné à être appliqué sur une paroi (4) d'un récipient, comprenant un bec verseur fileté extérieurement (6) ayant un rebord (20) faisant saillie vers l'extérieur à partir de sa zone d'extrémité inférieure, et un bouchon fileté intérieurement (8) pour fermer ledit bec verseur (6), ledit bouchon (8) comprenant des moyens à section sensiblement en forme de L faisant saillie vers le bas à partir d'un corps (8A) dudit bouchon (8), le membre supérieur de ladite section sensiblement en forme de L comprenant un pont inviolable cassable (8C), **caractérisé en ce que** le membre inférieur (22) de la section sensiblement en forme de L peut être soudé sur une surface supérieure dudit rebord (20).

5. Dispositif selon la revendication 4, dans lequel lesdits moyens à section sensiblement en forme de L comprennent une bague (8B).

6. Dispositif selon la revendication 5, dans lequel ladite bague (8B) se compose d'une pluralité de segments de bague distincts (32 ; 36).

7. Dispositif selon l'une quelconque des revendications 4 à 6, dans lequel ladite bague (8B) comprend un rebord (22) sensiblement radial.

8. Dispositif selon la revendication 7, dans lequel ledit bec verseur (6) comprend un épaulement annulaire (28) en saillie vers le haut et vers l'extérieur au niveau d'une périphérie interne de type report rebord (22) et ladite bague (8B) comprend une zone supérieure et une zone inférieure (22) relativement fine radialement par rapport à ladite zone supérieure, assemblant ladite zone supérieure audit rebord (22) et positionnée radialement immédiatement vers l'extérieur dudit épaulement (28).

9. Dispositif selon la revendication 8 et comprenant en outre un disque formant barrière (30) dans lequel ledit bec verseur (6) comprend une fraisure correspondant audit épaulement (28) et établissant une périphérie externe dudit disque formant barrière (30).

10. Dispositif selon l'une quelconque des revendications 4 à 9, dans lequel ledit pont (8C) est l'un parmi une multitude de ponts inviolables cassables relativement haut (8C) répartis autour dudit bouchon (8).

11. Dispositif selon la revendication 10 lorsqu'elle dépend de la revendication 6, dans lequel les segments (36) sont sensiblement coextensifs dans la largeur périphérique par rapport auxdits ponts (8C).

12. En combinaison, un récipient et un dispositif formant bec verseur (2) appliqué sur une paroi (4) dudit récipient, ledit dispositif (2) comprenant un bec verseur extérieurement fileté (6) ayant un rebord (20) faisant saillie vers l'extérieur à partir de sa zone d'extrémité inférieure, et un bouchon intérieurement fileté (8) pour fermer ledit bec verseur (6), ledit bouchon (8) comprenant des moyens à section sensiblement en forme de L faisant saillie vers le bas à partir d'un corps (8A) dudit bouchon (8), le membre supérieur de ladite section sensiblement en forme de L comprenant un pont inviolable cassable (8C), **caractérisé en ce que** le membre inférieur (22) de la section sensiblement en forme de L est soudé sur une surface supérieure dudit rebord (20) et/ou de ladite paroi (4).

13. Combinaison selon la revendication 12, dans laquelle lesdits moyens à section sensiblement en forme de L comprennent une bague (8B).

14. Combinaison selon la revendication 12 ou 13, dans laquelle ledit membre inférieur (22) est positionné entre et soudé sur ledit rebord (20) et une surface interne de ladite paroi (4) autour d'un trou passant par ladite paroi (4).

15. Combinaison selon la revendication 1, dans lequel ledit rebord (20) est fixé par soudage sur ladite surface interne radialement vers l'extérieur dudit membre inférieur (22).
